# EUROPEAN PATENT APPLICATION

(11) **EP 4 411 877 A1**
(43) Date of publication of application: **07.08.2024**
(21) Application number: 22905731.0
(22) Date of filing: 11.04.2022
(51) Int. Cl.: H01M 4/36, H01M 4/505, H01M 4/58, H01M 4/62, H01M 10/0525

(54) **LITHIUM IRON PHOSPHATE COMPOSITE MATERIAL, AND PREPARATION METHOD THEREFOR AND USE THEREOF**

(30) Priority: 16.12.2021 CN 202111547010
(71) Applicant: SVOLT ENERGY TECHNOLOGY CO., LTD, Changzhou, Jiangsu 213200 (CN)
(72) Inventor: WAN, Ning, hangzhou, Jiangsu 213200 (CN); YANG, Hongxin, hangzhou, Jiangsu 213200 (CN); LIU, Jing, hangzhou, Jiangsu 213200 (CN)
(74) Representative: Groth & Co. KB
(86) International application number: PCT/CN2022/086015
(87) International publication number: WO 2023/108961

(57) **Abstract**

Provided in the present disclosure are a lithium iron phosphate composite material, and a preparation method therefor and the use thereof. The lithium iron phosphate composite material comprises a core and a shell that covers the surface of the core, wherein the core is Li₆MnO₄, and the shell is carbon-coated lithium iron phosphate. The lithium iron phosphate composite material provided in the present disclosure uses Li₆MnO₄ as a positive electrode lithium supplementation material, and solves the problems of the loss of active lithium and the severe capacity depletion of a lithium iron phosphate positive electrode material during high-rate charging and discharging, such that the rate capability of the lithium iron phosphate material is improved, and the cycle life of a battery under high-rate conditions is prolonged.

## Description

### TECHNICAL FIELD

The present disclosure relates to the technical field of battery materials, for example, to a lithium iron phosphate composite material, a preparation method therefor and a use thereof.

### BACKGROUND OF THE INVENTION

With the innovation and development of technology, the market's requirements for the performance of lithium-ion batteries continue to increase, and high-rate lithium-ion batteries have gradually entered people's vision. Electric equipment such as car models, aircraft models, and ship models need to continuously provide large currents to meet high power requirements during work, so high-rate lithium-ion batteries are gradually selected as power sources; in the fields of national defense and military industry, such as electromagnetic interference, electromagnetic track launcher, magnetron and other equipment. Lithium-ion batteries mainly comprise three parts: positive electrode, electrolyte and negative electrode. Among them, the positive electrode material of lithium-ion battery is the key factor which determines the electrochemical performance, safety performance, energy density and price cost of the battery. At present, there are many positive electrode materials for lithium-ion batteries, such as cobalt-based positive electrode materials, nickel-based positive electrode materials, manganese-based positive electrode materials, and lithium iron phosphate positive electrode materials.

Among them, the theoretical capacity of the lithium iron phosphate (LiFePO₄) positive electrode material is 170mAh/g, with high reversible charge-discharge specific capacity, high energy density is, stable voltage platform, long service life, low cost, good safety performance and at the same time, it has the advantages of wide source of raw materials, low pollution, good safety and long cycle life, etc., and it is currently an ideal positive electrode material for power and energy storage lithium-ion batteries, which is widely used in power vehicles and energy storage and other industries.

The crystal structure of lithium iron phosphate belongs to the olivine structure. The atoms in the crystal are arranged in a hexagonal close-packed manner, but there is a slight twist. It is an orthorhombic crystal system, and the space group is Pnma. Due to the structure of the LiFePO₄ material, the electronic conductivity is low and the diffusion coefficient of lithium ions is small, resulting in poor rate capability, which greatly limits its development in the field of high-rate battery applications. At present, a large number of researches on the modification of lithium iron phosphate have been carried out at home and abroad to improve the conductivity of lithium iron phosphate, mainly including the preparation of nano-scale LiFePO₄, the preparation of porous LiFePO₄, and metal ion doping. However, there is still a lot of room for improvement in the electronic and ionic conductivity of lithium iron phosphate prepared by the above methods.

### SUMMARY OF THE INVENTION

The present disclosure provides a lithium iron phosphate composite material, a preparation method therefor and a use thereof.

One embodiment of the present disclosure provides a lithium iron phosphate composite material, the lithium iron phosphate comprises a core and a shell that covers the surface of the core, the core is Li₆MnO₄, and the shell is carbon-coated lithium iron phosphate.

In an embodiment provided by the present disclosure, the lithium iron phosphate composite material uses Li₆MnO₄ as a positive electrode lithium supplementation material, which solves the problems of the loss of active lithium and the severe capacity depletion of a lithium iron phosphate positive electrode material during high-rate charging and discharging, such that the rate capability of the lithium iron phosphate material is improved, and the cycle life of a battery under high-rate conditions is prolonged. Moreover, using a carbon-coated lithium iron phosphate layer as the shell can form a complete conductive network on the surface of lithium iron phosphate, which significantly improves the conductivity of carbon-coated lithium iron phosphate; at the same time, the carbon-coated lithium iron phosphate is spherical, which is beneficial to improve the tap density of the carbon-coated lithium iron phosphate.

In one embodiment, the mass ratio of the core to the shell is in the range of 0.005:1 to 0.05:1, such as 0.005:1, 0.01:1, 0.015:1, 0.02:1, 0.025:1, 0.03:1, 0.035: 1, 0.04:1, 0.045:1 or 0.05:1 and so on.

In one embodiment, the present disclosure provides a method for preparing the lithium iron phosphate composite material, wherein the method comprises:
preparing a carbon-coated lithium iron phosphate precursor sol by a sol-gel method, and mixing and stirring a Li₆MnO₄ precursor and the carbon-coated lithium iron phosphate precursor sol until the solvent is completely volatilized to obtain a wet material, and calcining the wet material to obtain the lithium iron phosphate composite material.

In one embodiment, a preparation process of the Li₆MnO₄ precursor comprises:
weighting a manganese source and a first lithium source respectively according to the stoichiometric ratio in Li₆MnO₄, and mixing the manganese source and the first lithium source, followed by ball milling and pre-calcining to obtain the Li₆MnO₄ precursor.

In one embodiment, the first lithium source comprises any one or a combination of at least two of lithium hydroxide, lithium carbonate, lithium acetate and lithium nitrate.

The manganese source comprises any one or a combination of at least two of manganese hydroxide, manganese acetate and manganese monoxide.

In one embodiment, the ball milling is carried out with a rotational speed ranging from 1000 r/min to 3500r/min, such as 1000r/min, 1200r/min, 1400r/min, 1600r/min, 1800r/min, 2000r/min, 2200r/min, 2400r/min, 2600r/min, 2800r/min, 3000r/min, 3200r/min, 3400r/min or 3500r/min and so on.

The time of the ball milling is in a range from 0.5 hours to 2 hours, such as 0.5 hours, 0.6 hours, 0.7 hours, 0.8 hours, 0.9 hours, 1.0 hours, 1.1 hours, 1.2 hours, 1.3 hours, 1.4 hours, 1.5 hours, 1.6 hours, 1.7 hours, 1.8 hours, 1.9 hours or 2.0 hours and so on.

In one embodiment, the temperature of pre-calcining is in a range from 300°C to 400°C, such as 300°C, 310°C, 320°C, 330°C, 340°C, 350°C, 360°C, 370°C, 380°C, 390°C or 400°C and so on.

The time of pre-calcining is in a range from 1 hour to 3 hours, such as 1.0 hours, 1.2 hours, 1.4 hours, 1.6 hours, 1.8 hours, 2.0 hours, 2.2 hours, 2.4 hours, 2.6 hours, 2.8 hours or 3.0 hours.

The pre-calcining is carried out under a nitrogen atmosphere or an argon atmosphere.

In one embodiment, a preparation process of the carbon-coated lithium iron phosphate precursor sol comprises:
mixing and stirring an iron source and a solvent, and dispersing to obtain a dispersion liquid, adding a carbon source, a chelating agent, a phosphorus source and a second lithium source under stirring conditions, and performing a heat preservation for a period of time to obtain the carbon-coated lithium iron phosphate precursor sol.

In one embodiment, the iron source comprises any one or a combination of at least two of ferric nitrate, ferrous sulfate and ferrous oxalate.

The solvent comprises deionized water.

The carbon source comprises any one or a combination of at least two of glucose, sucrose and polyethylene glycol.

The chelating agent comprises polyethylene glycol and/or citric acid.

The phosphorus source comprises any one or a combination of at least two of lithium dihydrogen phosphate, ammonium dihydrogen phosphate and diammonium hydrogen phosphate.

The second lithium source comprises any one or a combination of at least two of lithium hydroxide, lithium acetate, lithium nitrate and lithium dihydrogen phosphate.

In one embodiment, the molar ratio of Li element in the second lithium source, Fe element in the iron source and P element in the phosphorus source is in the range of 1.001:1:1 to 1.01:1:1, such as 1.001:1:1, 1.002:1:1, 1.003:1:1, 1.004:1:1, 1.005:1:1, 1.006:1:1, 1.007:1:1, 1.008:1:1, 1.009:1:1, or 1.01:1:1 and so on.

The mass ratio of the total mass of the second lithium source, the iron source and the phosphorus source to the carbon source is in the range of 1:0.01 to 1:0.05, such as 1:0.01, 1:0.015, 1:0.02, 1:0.025, 1:0.03, 1:0.035, 1:0.04, 1:0.045 or 1:0.05 and so on.

The mass ratio of the total mass of the second lithium source, the iron source and the phosphorus source to the chelating agent is in the range of 1:0.01 to 1:0.05, such as 1:0.01, 1:0.015, 1:0.02, 1:0.025, 1:0.03, 1:0.035, 1:0.04, 1:0.045 or 1:0.05 and so on.

In one embodiment, the temperature of the heat preservation is in a range from 50°C to 70°C, such as 50°C, 52°C, 54°C, 56°C, 58°C, 60°C, 62°C, 64°C, 66°C, 68°C or 70°C and so on.

The time of the heat preservation is in a range from 5 hours to 10 hours, such as 5.0 hours, 5.5 hours, 6.0 hours, 6.5 hours, 7.0 hours, 7.5 hours, 8.0 hours, 8.5 hours, 9.0 hours, 9.5 hours or 10.0 hours.

In one embodiment, the temperature of the mixing and stirring is in a range from 70°C to 90°C, such as 70°C, 72°C, 74°C, 76°C, 78°C, 80°C, 82°C, 84°C, 86°C, 88°C or 90°C and so on.

In one embodiment, the calcining is carried out using gradient calcination.

The gradient calcination process comprises:
raising the temperature of the material to T₁, keeping warm at H₁, then continuing to raise the temperature to T₂, and keeping warm at H₂.

The T₁ is in a range from 350°C to 390°C, such as 350°C, 355°C, 360°C, 365°C, 370°C, 375°C, 380°C, 385°C or 390°C.

The H₂ is in a range from 12 min to 25 min, such as 12 min, 13 min, 14 min, 15 min, 16 min, 17 min, 18 min, 19 min, 20 min, 21 min, 22 min, 23 min, 24 min or 25 min.

The T₂ is in a range from 600°C to 770°C, such as 600°C, 610°C, 620°C, 630°C, 640°C, 650°C, 660°C, 670°C, 680°C, 690°C, 700°C, 710°C, 720°C, 730°C, 740°C, 750°C, 760°C or 770°C and so on.

The H₂ is in a range from 0.5 hours to 5 hours, such as 0.5 hours, 1 hour, 1.5 hours, 2 hours, 2.5 hours, 3 hours, 3.5 hours, 4 hours, 4.5 hours or 5 hours.

The calcining is carried out under a nitrogen atmosphere or an argon atmosphere.

In one embodiment, the present disclosure provides a lithium battery. The lithium battery comprises a positive electrode, a separator and a negative electrode stacked in sequence, the positive electrode comprises a positive current collector and a positive active layer arranged on the surface of the positive current collector, and the positive active layer comprises the lithium iron phosphate composite material provided in an embodiment.

### BRIEF DESCRIPTION OF THE DRAWINGS

The drawings are used to provide a further understanding of the technical solutions of the present disclosure, and constitute a part of the description, and are used together with the embodiments of the application to explain the technical solutions of the present disclosure, and do not constitute limitations to the technical solutions of the present disclosure.
Figure 1 is a SEM image of the lithium iron phosphate composite material prepared by an example of the present disclosure;
Figure 2 is a TEM image of the lithium iron phosphate composite material prepared by an example of the present disclosure;
Figure 3 is a diagram of the discharge capacity retention rate of an example and a comparative example of the present disclosure under the conditions of 25°C and 3C rate;
Figure 4 is a diagram of the discharge capacity of an example and a comparative example of the present disclosure under the conditions of -10°C and different rate.

### DETAILED DESCRIPTION

The technical solutions of the present disclosure will be further described below in conjunction with the drawings and detailed embodiments.

### Example 1

The method for preparing lithium iron phosphate composite material is provided in the example, and the method comprises:
(1) Preparation of Li₆MnO₄ precursor: lithium hydroxide and manganese monoxide were weighted according to the molar ratio Li:Mn=6:1, lithium hydroxide and manganese monoxide were mixed, and ball milled at 3500r/min in a high-speed ball mill for 0.5h, pre-calcined at 400°C for 1h to obtain the Li₆MnO₄ precursor, ready for use;
(2) Preparation of carbon-coated lithium iron phosphate precursor sol: ferrous oxalate was added to deionized water and stirred to disperse to form a dispersion liquid. Under stirring conditions, sucrose, polyethylene glycol, ammonium dihydrogen phosphate and hydrogen lithium oxide were added, and the dispersion liquid was kept at 70°C for 5h to obtain the carbon-coated lithium iron phosphate precursor sol, wherein the molar ratio of Li:Fe:P in lithium hydroxide, iron nitrate and ammonium dihydrogen phosphate was 1.01: 1:1, the mass ratio of the total mass of lithium hydroxide, ferric nitrate and ammonium dihydrogen phosphate to glucose was 1:0.05, the mass ratio of the total mass of lithium hydroxide, ferric nitrate and ammonium dihydrogen phosphate to polyethylene glycol was 1:0.05;
(3) Preparation of lithium iron phosphate composite material: the Li₆MnO₄ precursor prepared in step (1) were added to the carbon-coated lithium iron phosphate precursor sol prepared in step (2), and the solution temperature was kept at 90°C, and kept stirring until the solvent was fully volatilized to obtain the wet material; the wet material was gradient calcined, and heated to 390°C in a high-purity nitrogen atmosphere, and kept for 12 min; then continued to heat to 770°C, kept for 0.5h to obtain the lithium iron phosphate composite material.

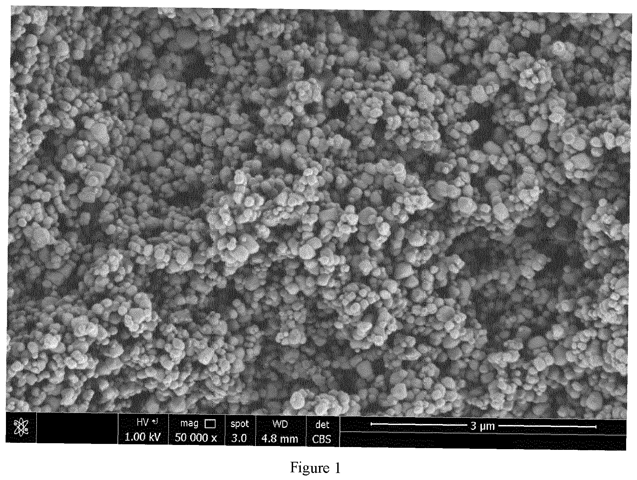

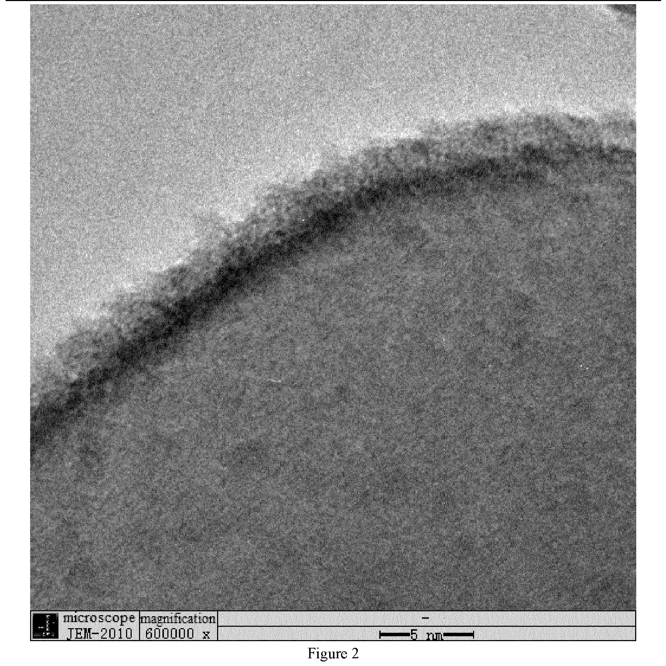

In the lithium iron phosphate composite material, Li₆MnO₄ was used as the core and carbon-coated lithium iron phosphate was used as the outer coating layer, and the mass ratio of Li₆MnO₄ to carbon-coated lithium iron phosphate was 0.05:1. Among them, Figure 1 is a SEM image of the prepared lithium iron phosphate composite material. It can be seen from Figure 1 that the particle size of the composite material is relatively uniform, and the particle size is basically kept within 1 µm; Figure 2 is a TEM image of the prepared lithium iron phosphate composite material. It can be seen from Figure 2 that the thickness of the outer coating layer of carbon-coated lithium iron phosphate is about 1.5 nm to 2nm, and the coating layer is relatively uniform.

The physical and chemical indexes of the prepared lithium iron phosphate composite material were tested by conventional technical means, and the results are shown in Table 1 below:

**Table 1**

| | | | | | |
|---|---|---|---|---|---|
| index | D10 | D50 | D90 | Dmax | carbon content |
| numerical value | 0.13µm | 0.25µm | 0.42µm | 0.59µm | 1.52% |
| pH | SSA | TD | powder compacted density | grain size | cell volume |
| 9.25 | 13.95m²/g | 0.83g/cm³ | 2.39g/cc | 102.7nm | 290.65Å^{^3} |

### Example 2

This example provides a method for preparing a lithium iron phosphate composite material, the preparation method comprises:
(1) Preparation of Li₆MnO₄ precursor: lithium hydroxide and manganese hydroxide were weighted according to the molar ratio Li:Mn=6:1, lithium hydroxide and manganese monoxide were mixed, and ball milled at 1000r/min in a high-speed ball mill for 2h , pre-calcined at 300°C for 3h to obtain the Li₆MnO₄ precursor, ready for use;
(2) Preparation of carbon-coated lithium iron phosphate precursor sol: iron nitrate was added to deionized water and stirred to disperse to form a dispersion liquid. Under stirring conditions, sucrose, polyethylene glycol, ammonium dihydrogen phosphate and dihydrogen phosphate were added in sequence. The dispersion liquid was kept at 50°C for 10h to obtain the carbon-coated lithium iron phosphate precursor sol, wherein the molar ratio of Li:Fe:P in dihydrogen phosphate, iron nitrate and ammonium dihydrogen phosphate was 1.001: 1:1, the mass ratio of the total mass of dihydrogen phosphate, iron nitrate and ammonium dihydrogen phosphate to glucose was 1:0.01, the mass ratio of the total mass of dihydrogen phosphate, iron nitrate and ammonium dihydrogen phosphate to polyethylene glycol was 1:0.01;
(3) Preparation of lithium iron phosphate composite material: the Li₆MnO₄ precursor prepared in step (1) were added to the carbon-coated lithium iron phosphate precursor sol prepared in step (2), and the solution temperature was kept at 70°C, and kept stirring until the solvent was fully volatilized to obtain the wet material; the wet material was gradient calcined, and heated to 350°C in a high-purity nitrogen atmosphere, and kept for 25 min; then continued to heat to 600°C, kept for 5h to obtain the lithium iron phosphate composite material.

In the lithium iron phosphate composite material, Li₆MnO₄ was used as the core and carbon-coated lithium iron phosphate was used as the outer coating layer, and the mass ratio of Li₆MnO₄ to carbon-coated lithium iron phosphate was 0.005:1.

### Example 3

This example provides a method for preparing a lithium iron phosphate composite material, the preparation method comprises:
(1) Preparation of Li₆MnO₄ precursor: lithium hydroxide and manganese monoxide were weighted according to the molar ratio Li:Mn=6:1, lithium hydroxide and manganese monoxide were mixed, and ball milled at 2400r/min in a high-speed ball mill for 1h, pre-calcined at 360°C for 2h to obtain the Li₆MnO₄ precursor, ready for use;
(2) Preparation of carbon-coated lithium iron phosphate precursor sol: ferrous oxalate was added to deionized water and stirred to disperse to form a dispersion liquid. Under stirring conditions, sucrose, citric acid, ammonium dihydrogen phosphate and lithium nitrate were added in sequence, and the dispersion liquid was kept at 60°C for 7h to obtain the carbon-coated lithium iron phosphate precursor sol, wherein the molar ratio of Li:Fe:P in lithium nitrate, ferrous oxalate and ammonium dihydrogen phosphate was 1.005:1:1, the mass ratio of the total mass of lithium nitrate, ferrous oxalate and ammonium dihydrogen phosphate to sucrose was 1:0.02, the mass ratio of the total mass of lithium nitrate, ferrous oxalate and ammonium dihydrogen phosphate to polyethylene glycol was 1:0.03;
(3) Preparation of lithium iron phosphate composite material: the Li₆MnO₄ precursor prepared in step (1) were added to the carbon-coated lithium iron phosphate precursor sol prepared in step (2), and the solution temperature was kept at 80°C, and kept stirring until the solvent was fully volatilized to obtain the wet material; the wet material was gradient calcined, and heated to 370°C in a high-purity nitrogen atmosphere, and kept for 20 min; then continued to heat to 700°C, kept for 2h to obtain the lithium iron phosphate composite material.

In the lithium iron phosphate composite material, Li₆MnO₄ was used as the core and carbon-coated lithium iron phosphate as the outer coating layer, and the mass ratio of Li₆MnO₄ to carbon-coated lithium iron phosphate was 0.01:1.

### Comparative example

This comparative example provides a method for preparing a lithium iron phosphate composite material, the preparation method comprises:
(1) Preparation of carbon-coated lithium iron phosphate precursor sol: ferrous oxalate was added to deionized water and stirred to disperse to form a dispersion liquid. Under stirring conditions, sucrose, polyethylene glycol, ammonium dihydrogen phosphate and hydrogen lithium oxide were added, and the dispersion liquid was kept at 50°C for 5h to obtain the carbon-coated lithium iron phosphate precursor sol, wherein the molar ratio of Li:Fe:P in lithium hydroxide, iron nitrate and ammonium dihydrogen phosphate was 1.001:1:1, the mass ratio of the total mass of lithium hydroxide, ferric nitrate and ammonium dihydrogen phosphate to glucose was 0.01:1, the mass ratio of the total mass of lithium hydroxide, ferric nitrate and ammonium dihydrogen phosphate to polyethylene glycol was 0.01:1;
(2) The carbon-coated lithium iron phosphate precursor prepared in step (1) was continuously stirred at 70°C until the solvent was fully volatilized to obtain a wet material, the wet material was gradient calcined, and heated to 350°C in a high-purity nitrogen atmosphere, and kept for 12 min; then continued to heat to 600°C, kept for 0.5h to obtain the carbon-coated lithium iron phosphate composite material.

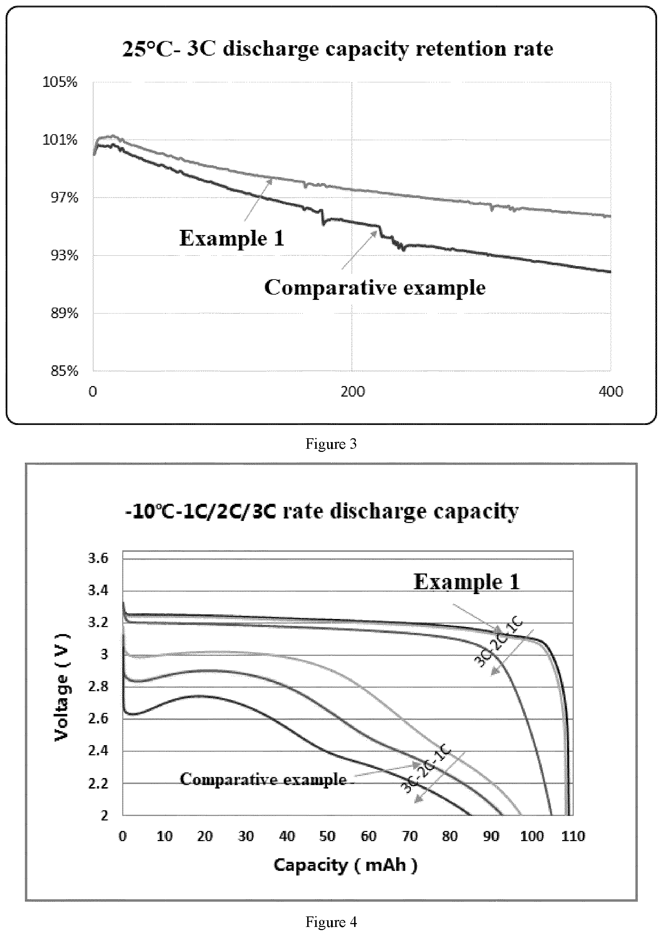

The lithium iron phosphate materials prepared in Examples 1-3 and Comparative Example were tested for electrochemical performance in a lithium-ion battery, and the results are shown in Table 2. Figure 3 shows the comparison of discharge capacity retention rates between Example 1 and the comparison example under the conditions of 25°C and 3C rate, and Figure 4 shows the comparison of discharge capacities between Example 1 and the comparison example under the conditions of -10°C and different rate.

**Table 2**

| Example | 25 °C 3C discharge capacity 400 cycles retention rate (%) | -10°C 1C discharge capacity (mAh) | -10°C 2C discharge capacity (mAh) | -10°C 3C discharge capacity (mAh) |
|---|---|---|---|---|
| Example 1 | 95.71 | 108.16 | 107.75 | 104.65 |
| Example 2 | 95.9 | 106.14 | 105.93 | 102.18 |
| Example 3 | 95.3 | 108.02 | 106.95 | 103.97 |
| Comparative example | 91.82 | 97.36 | 92.97 | 85.05 |

It can be seen from the data in Table 1 that the capacity retention rate of the carbon-coated lithium iron phosphate positive electrode material prepared in Comparative Example 1 and the discharge capacity at different discharge rates are smaller than those in the examples.

It can be seen from Figure 3 that under the condition of 3C (25°C 2.0-3.65V), Example 1 corresponds to a battery performance discharge capacity retention rate of 95.71% for 400 cycles, while the lithium iron phosphate material of the comparative example corresponds to a battery discharge capacity retention rate of only 91.82% for 400 cycles. It can be seen from Figure 4 that under the conditions of -10°C (1C/2C/3C 2.0-3.65V), Example 1 corresponds to battery performance with 1C discharge capacity of 108.16mAh, 2C discharge capacity of 107.75mAh, and 3C discharge capacity of 104.65mAh, while the comparative example of lithium iron phosphate material corresponds to battery performance with 1C discharge capacity of 97.36mAh, 2C discharge capacity of 92.97mAh, and 3C discharge capacity of 85.05mAh, indicating that the lithium iron phosphate composite material prepared in Example 1 has good rate capability and cycling performance.

In conclusion, the preparation method of the present disclosure prepares the nano-scale lithium iron phosphate precursor by the sol-gel method, and uses the nano-scale lithium iron phosphate as the shell, uniformly coated on Li₆MnO₄, and uses Li₆MnO₄ as the positive electrode lithium supplementation material and solves the problems of the loss of active lithium and the severe capacity depletion of a lithium iron phosphate positive electrode material during high-rate charging and discharging, such that the rate capability of the lithium iron phosphate material is improved, and the cycle life of a battery under high-rate conditions is prolonged. And the preparation method disclosed in this disclosure can effectively reduce the temperature and time requirements for sintering of lithium iron phosphate materials, reduce production energy consumption and production cycle.

## Claims

1. A lithium iron phosphate composite material, wherein the lithium iron phosphate composite material comprises a core and a shell that covers the surface of the core, the core is Li₆MnO₄, and the shell is carbon-coated lithium iron phosphate.

2. The lithium iron phosphate composite material of claim 1, wherein the mass ratio of the core to the shell is in the range of 0.005:1 to 0.05:1.

3. A method for preparing the lithium iron phosphate composite material of claim 1 or 2, wherein the method comprises:
preparing a carbon-coated lithium iron phosphate precursor sol by a sol-gel method, and mixing and stirring a Li₆MnO₄ precursor and the carbon-coated lithium iron phosphate precursor sol until the solvent is completely volatilized to obtain a wet material, and calcining the wet material to obtain the lithium iron phosphate composite material.

4. The method of claim 3, wherein a preparation process of the Li₆MnO₄ precursor comprises:
weighting a manganese source and a first lithium source respectively according to the stoichiometric ratio in Li₆MnO₄, and mixing the manganese source and the first lithium source, followed by ball milling and pre-calcining to obtain the Li₆MnO₄ precursor.

5. The method of claim 4, wherein the first lithium source comprises any one or a combination of at least two of lithium hydroxide, lithium carbonate, lithium acetate and lithium nitrate; and
the manganese source comprises any one or a combination of at least two of manganese hydroxide, manganese acetate and manganese monoxide.

6. The method of claim 4, wherein the ball milling is carried out with a rotational speed ranging from 1000 r/min to 3500 r/min; and
the time of ball milling is in a range from 0.5 hours to 2 hours.

7. The method of claim 4, wherein the temperature of pre-calcining is in a range from 300°C to 400°C;
the time of pre-calcining is in a range from 1hour to 3 hours; and
the pre-calcining is carried out under a nitrogen atmosphere or an argon atmosphere.

8. The method of claim 3, wherein a preparation process of the carbon-coated lithium iron phosphate precursor sol comprises:
mixing and stirring an iron source and a solvent, and dispersing to obtain a dispersion liquid, adding a carbon source, a chelating agent, a phosphorus source and a second lithium source under stirring conditions, and performing a heat preservation for a period of time to obtain the carbon-coated lithium iron phosphate precursor sol.

9. The method of claim 8, wherein the iron source comprises any one or a combination of at least two of ferric nitrate, ferrous sulfate and ferrous oxalate;
the solvent comprises deionized water;
the carbon source comprises any one or a combination of at least two of glucose, sucrose and polyethylene glycol;
the chelating agent comprises polyethylene glycol and/or citric acid;
the phosphorus source comprises any one or a combination of at least two of lithium dihydrogen phosphate, ammonium dihydrogen phosphate and diammonium hydrogen phosphate; and
the second lithium source comprises any one or a combination of at least two of lithium hydroxide, lithium acetate, lithium nitrate and lithium dihydrogen phosphate.

10. The method of claim 8, wherein the molar ratio of Li element in the second lithium source, Fe element in the iron source and P element in the phosphorus source is in the range of 1.001:1:1 to 1.01:1:1;
the mass ratio of the total mass of the second lithium source, the iron source and the phosphorus source to the carbon source is in the range of 1:0.01 to 1:0.05;
the mass ratio of the total mass of the second lithium source, the iron source and the phosphorus source to the chelating agent is in the range of 1:0.01 to 1:0.05.

11. The method of claim 8, wherein the temperature of the heat preservation is in a range from 50°C to 70°C; and the time of the heat preservation is in a range from 5 hours to 10 hours.

12. The method of claim 3, wherein the temperature of the mixing and stirring is in a range from 70°C to 90°C.

13. The method of claim 3, wherein the calcining is carried out using gradient calcination;
the gradient calcination process comprises:
raising the temperature of the material to T₁, keeping warm at H₁, then continuing to raise the temperature to T₂, and keeping warm at H₂;
the T₁ is in a range from 350°C to 390°C;
the H₂ is in a range from 12min to 25 min;
the T₂ is in a range from 600°C to 770°C;
the H₂ is in a range from 0.5h to 5h; and
the calcining is carried out under a nitrogen atmosphere or an argon atmosphere.

14. A lithium battery, wherein the lithium battery comprises a positive electrode, a separator and a negative electrode stacked in sequence, the positive electrode comprises a positive current collector and a positive active layer arranged on the surface of the positive current collector, and the positive active layer comprises the lithium iron phosphate composite material of claim 1 or 2.
